# EUROPEAN PATENT APPLICATION

(11) **EP 4 621 584 A1**
(43) Date of publication of application: **24.09.2025**
(21) Application number: 24901773.2
(22) Date of filing: 09.08.2024
(51) Int. Cl.: G06F 13/28

(54) **COMPUTING DEVICE, SERVER, DATA PROCESSING METHOD, AND STORAGE MEDIUM**

(30) Priority: 29.12.2023 CN 202311850460
(71) Applicant: Suzhou Metabrain Intelligent Technology Co., Ltd., Suzhou, Jiangsu 215000 (CN)
(72) Inventor: JHANG, You Jyun, Suzhou, Jiangsu 215000 (CN); KAO, Mingduo, Suzhou, Jiangsu 215000 (CN)
(74) Representative: Studio Torta S.p.A.
(86) International application number: PCT/CN2024/111106
(87) International publication number: WO 2025/138849

(57) **Abstract**

The present disclosure provides a computing device, a server, a data processing method and a storage medium, belonging to the field of computer technologies. The computing device comprises: a Central Processing Unit (CPU), an accelerator, and a first Peripheral Component Interconnect Express (PCle) switch comprising: a first downstream port connected to the accelerator, an upstream port connected to the CPU, and multiple ports each supporting Compute Express Link (CXL) protocol; wherein the accelerator is configured to perform access operations on a host memory based on the CXL protocol.

## Description

### Cross-Reference to Related Application

The present disclosure claims priority to Chinese Patent Application No. 202311850460.9, filed to the China National Intellectual Property Administration on December 29, 2023 and entitled "Computing Device, Server, Data Processing Method, and Storage Medium", which is incorporated herein by reference in its entirety.

### Technical Field

The present disclosure relates to a computing device, a server, a data processing method, and a storage medium.

### Background

In recent years, the widespread application of artificial intelligence (Al) have posed significant technical challenges, particularly in meeting the demands of machine learning and deep learning. Conventional Central Processing Units (CPUs) and Graphic Processing Unit (GPUs) often encounter performance bottlenecks when processing complex AI tasks. These bottlenecks arise not from insufficient computational capabilities, but rather from limited memory resources in accelerators such as GPUs.

Therefore, how to provide an architecture or method for expanding accelerator memory becomes a technical problem to be solved urgently.

### Summary

In a first aspect, embodiments of the present disclosure provide a computing device, including:
a Central Processing Unit (CPU);
an accelerator; and
a first Peripheral Component Interconnect Express (PCle) switch comprising:
   a first downstream port connected to the accelerator,
   an upstream port connected to the CPU, and
   multiple ports each supporting Compute Express Link (CXL) protocol;
   wherein the accelerator is configured to perform access operations on a host memory based on the CXL protocol.

In a second aspect, embodiments of the present disclosure further provide a server, including the computing device according to any implementation of the first aspect.

In a third aspect, embodiments of the present disclosure further provide a data processing method, implemented by the computing device according to any implementation of the first aspect, the method includes:
the accelerator sends a first data request message to the host memory based on the CXL protocol; and
in response to the first data request message, the host memory sends first task data to the accelerator via the first PCIe switch.

In a fourth aspect, embodiments of the present disclosure further provide a non-transitory computer-readable storage medium, on which computer-readable instructions are stored, wherein the computer-readable instructions is configured to, in response to being executed by a processor, implement the data processing method according to any implementation of the third aspect.

Details of one or more embodiments of the present disclosure are set forth in the accompanying drawings and the description below. Other features and advantages of the present disclosure will become apparent from the description, the accompanying drawings and the claims.

### Brief Description of the Drawings

In order to illustrate the technical solutions in the present disclosure or in the related art more clearly, hereinafter, accompanying drawings requiring to be used in the embodiments or the related art will be introduced briefly. Apparently, the accompanying drawings in the following description merely relate to some embodiments of the present disclosure, and for a person of ordinary skill in the art, other accompanying drawings can also be obtained according to these accompanying drawings without involving any inventive effort.
FIG. 1 is a schematic structural diagram of a computing device provided according to embodiments of the present disclosure;
FIG. 2 is a schematic diagram of a basic architecture in which a GPU uses a host memory via a PCIe/CXL interface between a CPU and the GPU provided according to embodiments of the present disclosure;
FIG. 3 is a schematic diagram of a basic architecture for implementing a converged memory between a CPU and an FPGA provided according to embodiments of the present disclosure;
FIG. 4 is a schematic diagram in which a GPU accesses a converged memory by using a switch having a CXL function provided according to embodiments of the present disclosure;
FIG. 5 is a schematic diagram of a direct memory access architecture provided according to embodiments of the present disclosure;
FIG. 6 is a schematic diagram of expansion of a memory direct access architecture provided according to embodiments of the present disclosure;
FIG. 7 is a first schematic diagram of a memory pool expansion architecture provided according to embodiments of the present disclosure;
FIG. 8 is a second schematic diagram of a memory pool expansion architecture provided according to embodiments of the present disclosure;
FIG. 9 is a schematic connection diagram of eight GPUs, i.e. GPU0 to GPU7, provided according to embodiments of the present disclosure;
FIG. 10 is a schematic structural diagram of a server provided according to embodiments of the present disclosure; and
FIG. 11 is a schematic flowchart of a data processing method provided according to embodiments of the present disclosure.

### Detailed Description of the Embodiments

To make the objects, technical solutions and advantages of the present disclosure clearer, hereinafter, the technical solutions in the present disclosure will be described clearly and thoroughly in combination with the accompanying drawings in the present disclosure. Obviously, the embodiments as described are only some rather than all the embodiments of the present disclosure. All other embodiments obtained by a person of ordinary skill in the art on the basis of the embodiments of the present disclosure without involving any inventive effort shall all fall within the scope of protection of the present disclosure.

Terms "first", "second" and the like in the present disclosure are used for distinguishing similar objects rather than describing a specific sequence or a precedence order. It should be understood that terms so used may be interchanged where appropriate such that embodiments of the present disclosure may be implemented in sequences other than those illustrated or described herein. Moreover, objects distinguished by "first" and "second"are generally objects of one type, and do not limit the number of objects. For example, the number of first object may be one or plural. In addition, "or" in the present disclosure denotes at least one of objects linked by "or". For example, "A or B" encompasses three solutions, i.e., solution I: including A but not including B; solution II: including B but not including A; and solution III: including both A and B. The character "/" generally indicates an "or" relationship of associated objects before and after the character.

The term "indication" in the present disclosure may be a direct indication (or explicit indication) or an indirect indication (or implicit indication). The direct indication may be understood as: in a sent indication, a sender explicitly notifies a receiver of content such as specific information, an operation to be performed, a request result; and the indirect indication may be understood as: a receiver determines corresponding information according to an indication sent by a sender, or makes judgment and determines, according to the judgment result, an operation to be performed or a request result.

In recent years, the widespread application of artificial intelligence (AI) has posed significant technical challenges, particularly in meeting the demands of machine learning and deep learning. Conventional Central Processing Units (CPUs) and Graphic Processing Units (GPUs) often encounter performance bottlenecks when processing complex AI tasks. These tasks generally require a large amount of computing resources and memory capacity.

For AI applications, existing hardware architectures may adequately handle certain tasks, but they may encounter performance and memory limitations when processing large-scale, complex AI workloads. The increasing scale and complexity of AI models have led to exponentially growing demands for both computational power and storage capacity, imposing higher requirements on hardware. In addition to computational performance challenges, AI training also faces constraints in memory capacity and bandwidth. Deep learning models typically have a large number of parameters, requiring significant memory capacity for data storage and processing. Furthermore, due to the large-scale parallel computing requirements of the deep learning models, high memory bandwidth becomes critical.

To address these challenges, many hardware manufacturers are developing new solutions, including GPUs with higher memory capacity and dedicated AI accelerators. Additionally, high bandwidth memory technologies, such as high bandwidth memory (HBM) and graphics double data rate (GDDR), have been also widely adopted.

The computational demands of AI training grow substantially annually The future bottleneck of AI training lies not in computational capability, but in GPU memory capacity.Thus, how to provide an architecture or method for expanding GPU memory capacity becomes an urgent technical problem to be solved.

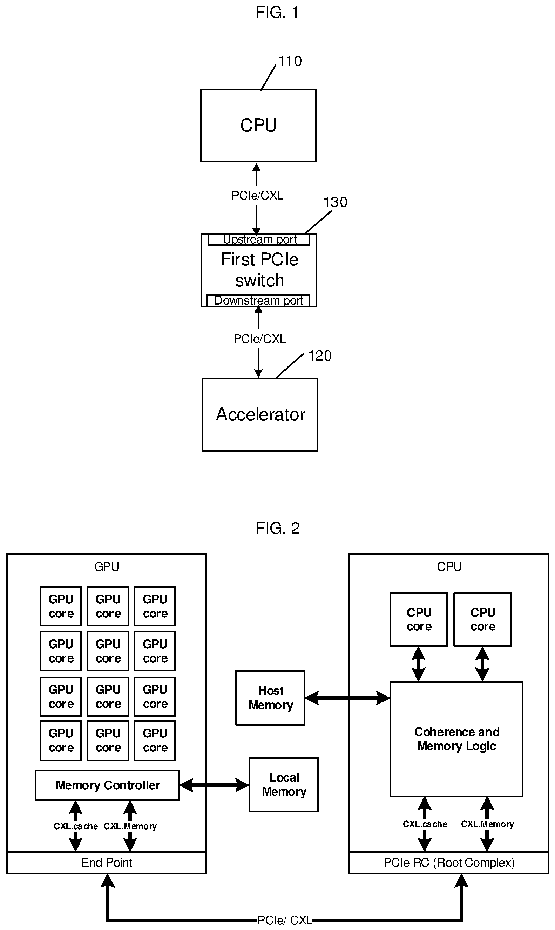

Hereinafter, a computing device, a server, a data processing method, and a storage medium in the present disclosure will be described in detail with reference to FIG. 1 to FIG. 11.

The computing device disclosed herein implements a GPU memory expansion architecture to overcome the memory wall problem encountered by GPUs.

The present disclosure provides a scale-out memory architecture by using a CXL (Compute Express Link) high-speed interconnect technology. As used herein, 'scale-out memory' means a method for expanding available memory capacity in computing systems. When processing large data sets or executing memory-intensive tasks, the memory capacity of a single computing node may become insufficient. The scale-out memory connects multiple computing nodes (typically computing devices or servers) into a large cluster, allowing nodes to share memory resources and thereby expanding the available memory capacity.

The CXL technology is introduced below. The CXL (Compute Express Link) is a high-speed interconnect technology, and aims to solve memory and accelerator connection challenges in data centers and the computing systems. The CXL is an open standard jointly promoted by a consortium of computer hardware manufacturers. The CXL technology was originally established for CPUs to share memory with AFUs (Accelerator Function Units), so as to implement a memory interconnect technology between processors (such as CPU, ASIC, FPGA , and other processing units).

CXL 3.0 functionalities include peer-to-peer messaging between peripheral devices, which provides a direct memory access (DMA) transmission architecture without a CPU intervention. With an enhanced hardware consistency mechanism, memory areas of the peripheral devices can be simultaneously shared and used by multiple host CPUs. CXL 3.0 is the latest version of the CXL technology, and introduces improvement and expansion on the basis of previous versions. CXL 3.0 includes the following key features:
High bandwidth and low latency: CXL 3.0 enables high-bandwidth, low-latency data transmission, which enables higher-speed data transmission from a memory to an accelerator or other processing units, thereby improving the system performance.

Memory expansion: CXL 3.0 supports memory expansion, and allows multiple devices to share a physical memory, thereby enlarging the available memory capacity. This is particularly advantageous for processing large-scale datasets and memory-intensive tasks.

Computing acceleration: CXL 3.0 supports an efficient connection to computing accelerators (e.g. GPU, FPGA), such that they can work more collaboratively with a host processor and a memory, thereby accelerating computing tasks.

Compatibility: CXL 3.0 is compatible with PCI Express (PCIe) and Memory CXL interconnect standards, such that existing hardware and software can be upgraded and migrated relatively smoothly.

CXL defines three types of application forms of peripheral devices:
Type 1: this type operates through CXL.io and CXL.cache protocols, and is applicable to those special-purpose acceleration devices that are not configured with independent memories, for example, some smart network cards or image acceleration cards; now, memories of host CPUs can be accessed through the CXL protocol, and these memories are shared to these peripheral devices for use as a cache. The basic concept of a CXL Type 1 application device is similar to that of a CPU built-in display device and can share the architecture of the host memory (i.e., main memory) of the system, and can also enable the peripheral devices to use the host memory, such that these peripheral devices do not need to be configured with independent memories. Any PCle peripheral device supporting CXL.io and CXL.cache protocols may access the system host memory under the CXL standard.
Type 2: this type operates through CXL.io, CXL.cache and CXL.mem protocols, is used for a generic acceleration device having a high-performance memory (GDDR or HBM) per se, such as a GPU card, or an acceleration card based on FPGA or ASIC, and can provide bidirectional memory sharing between these peripheral devices and the host CPU through the CXL protocols, such that not only the peripheral devices can access the memory of the host CPU, but also the host CPU can access the memories of the peripheral devices. The CXL Type 2 applications dynamically allocate memory resources of the host CPU and the peripheral devices by sharing the memories of the two, thereby improving overall memory utilization efficiency.
Type 3: this type operates through CXL.io and CXL.mem protocols. Such a device is a memory expansion board based on a dynamic random access memory (DRAM) or a Storage Class Memory (SCM); and the host CPU may access a DRAM or SCM integrated on such a memory expansion board or a non-volatile SCM through the CXL protocols.

FIG. 1 is a schematic structural diagram of a computing device provided according to embodiments of the present disclosure. As shown in FIG. 1, the computing device includes: a central processing unit (CPU) 110, an accelerator 120 and a first peripheral component interconnect express (PCle) switch 130;
wherein the accelerator 120 is connected to a first downstream port of the first PCIe switch 130;
an upstream port of the first PCIe switch 130 is connected to the CPU 110;
each port of the first PCIe switch 130 works in a Compute Express Link (CXL) mode or a PCIe mode;
and the accelerator is configured to perform access operations on a host memory based on the CXL protocol.

Here, the CXL protocol includes CXL.io and CXL.cache protocols.

In an embodiment, the accelerator may be a GPU, or other heterogeneous acceleration devices. For example, other heterogeneous acceleration devices may be a field programmable gate array (FPGA), an application specific integrated circuit (ASIC), or the like.

It can be understood that, the accelerator is connected to the CPU via the first PCle switch, such that the accelerator directly performs an access operation on the host memory of the system based on the CXL protocol. The access operation refers to writing data into the host memory or reading data from the host memory.

Each port of the first PCle switch supports a Compute Express Link (CXL) protocol. Each port of the first PCle switch works in a Compute Express Link (CXL) mode or a PCIe mode, that is, each port of the first PCle switch is a PCle/CXL interface.

Hereinafter, illustration is made by taking the accelerator being a GPU as an example. FIG. 2 is a schematic diagram of a basic architecture in which a GPU uses a host memory via a PCIe/CXL interface between a CPU and the GPU provided according to embodiments of the present disclosure. As shown in FIG. 2, it relates to an application from of CXL Type 1, in which a GPU can access a host memory by the CXL Type 1 application, and such a design brings several advantages:
Resource sharing: the GPU and a host CPU share the same memory space, and can directly access data in the host memory, thereby avoiding additional replication of data from the host memory to a GPU dedicated memory.

Cost reduction: the GPU can directly configure a memory capacity via CXL expansion.

Cache acceleration: the host memory is used as a cache memory, which can accelerate data access of the GPU and improve the performance.

The introduction of the CXL technology further promotes the collaborative work between the GPU and the host CPU, and provides more efficient memory access and sharing, thereby optimizing high-performance computing applications.

In embodiments of the present disclosure, the accelerator is connected to the CPU via the first PCle switch, such that the accelerator may perform access operations on the host memory based on the CXL protocol, and then the accelerator may directly perform an operation on the host memory, thereby expanding an available memory of the accelerator, providing more efficient memory access and sharing, accelerating data access, and improving the performance.

In some embodiments, the computing device further includes: a memory expansion unit,
wherein the memory expansion unit is connected to a second downstream port of the first PCIe switch;
a local memory of the memory expansion unit and the host memory form a converged memory; and
the accelerator is configured to perform access operations on the converged memory based on the CXL protocol.

It can be understood that, the memory expansion unit in this embodiment is connected to the second downstream port of the first PCIe switch, the first downstream port of the first PCle switch is connected to the accelerator, and the upstream port of the first PCle switch is connected to the CPU; then, peer-to-peer communication can be achieved between the accelerator and the memory expansion unit, and the memory expansion unit may perform access operations on the host memory, and correspondingly, the CPU may also perform access operations on the local memory of the memory expansion unit.

The local memory of the memory expansion unit and the host memory form a converged memory, and the accelerator can perform access operations on the converged memory based on the CXL protocol.

The converged memory will be introduced below.

The converged memory is a computing concept, in which different types of memory technologies are integrated or combined into a single memory pool or architecture. This method is intended to address the limitations and challenges of conventional memory hierarchies, in which different memory types, such as DRAM, SRAM (Static Random Access Memory), NAND (Not AND) flash memory, and other memory types, are used for specific purposes, such as host memory, cache, and storage.

The concept of the converged memory is to create a unified memory system, which can provide better performance, energy efficiency, and simplified memory management. By combining multiple memory technologies, data can be more effectively shared and moved between memory hierarchies of different levels, thereby reducing data transmission requirements between different memory types, and potentially reducing latency.

In an embodiment, the memory expansion unit includes at least one first processing unit which has an independent memory.

In an embodiment, the first processing unit includes any one or a combination of a Field Programmable Gate Array (FPGA), a Complex Programmable Logic Device (CPLD), a Programmable Logic Device (PLD), an Application Specific Integrated Circuit (ASIC), a Generic Array Logic (GAL) device, a System on Chip (SOC), a Software Defined Infrastructure (SDI) device, and an Artificial Intelligence (AI) device.

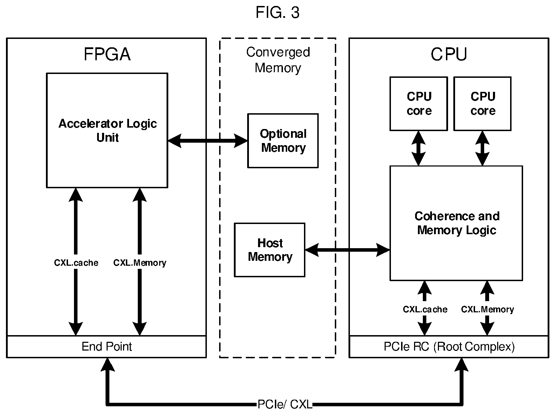

Hereinafter, taking the first processing unit being an FPGA as an example. FIG. 3 is a schematic diagram of a basic architecture for implementing a converged memory between a CPU and an FPGA provided according to embodiments of the present disclosure. As shown in FIG. 3, it relates to a typical application of CXL Type 2, in which bidirectional memory sharing is achieved between an FPGA and a host CPU. This allows devices such as the FPGA to have a high-performance independent memory (for example, GDDR or HBM) and share the memory with the CPU, so as to achieve more efficient data transmission and processing. By means of the CXL communication architecture, the CPU and the FPGA can realize tighter integration and cooperative work, and a host memory of the CPU and an optional memory of the FPGA form a converged memory, thereby improving the overall performance and flexibility of the system. Technology for integrating and sharing memory resources of the FPGA and the CPU is provided. Traditionally, the FPGA and the CPU have independent memory spaces, and data must be explicitly replicated or transmitted between them. In the converged memory technology, sharing of memory resources is achieved on a hardware and software level, such that the FPGA and the CPU can access the same physical memory, thereby achieving more efficient data transmission and sharing.

The converged memory technology provides the following technical benefits:
Data sharing: the FPGA and the CPU can share the same memory space directly, without replicating data. In this way, data can be transmitted more efficiently between the FPGA and the CPU, thereby reducing the latency of data transmission and the overhead of replication.

Flexibility: the FPGA can access the memory space of the CPU, enabling the FPGA to directly process data stored by the CPU. This provides greater flexibility and possibility for cooperative work between the FPGA and the CPU.enabling the FPGA to directly process

Memory management: by the converged memory, memory management can be more unified, thereby simplifying the transmission and management of data between the FPGA and the CPU, and improving the overall performance of the system.

Resource saving: since the same memory resources are shared, the required physical memory capacity in the system can be reduced, thereby reducing hardware costs.

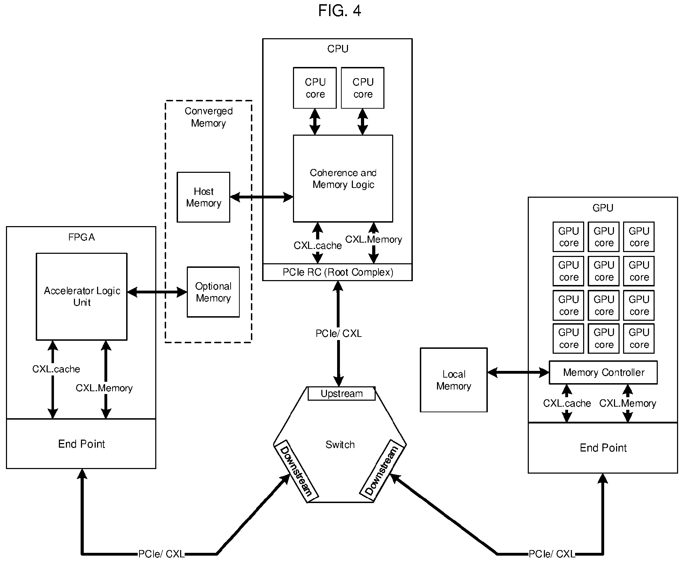

In the present disclosure, a switch (or referred to as a switch device) with a CXL function is used to implement both a converged memory function of the CPU and the FPGA, and direct access by the GPU the same memory space shared by the CPU and the FPGA. FIG. 4 is a schematic diagram in which a GPU accesses a converged memory by using a switch having a CXL function provided according to embodiments of the present disclosure. As shown in FIG. 4, an upstream port of a switch is connected to a CPU root complex, and a downstream port thereof is connected to a GPU and an FPGA. The GPU can allocate a memory of the FPGA by the switch to supplement insufficient local memory of the GPU itself; in addition, a physical layer of a CXL 3.0 protocol uses an interface of PCIe 6.0, in which the PCIe 6.0 is the latest version of a PCle (Peripheral Component Interconnect Express) bus, and the transmission speed thereof is 16 GT/s (gigabit per second). That is, the speed of PCIe 6.0 is 16 gigabits per second, which has higher data transmission rate compared to previous versions (e.g. PCIe 5.0 and PCIe 4.0). This allows the host CPU and a peripheral device to achieve high-speed memory access and sharing via the CXL protocol.

The architecture shown in FIG. 4 enables large-scale memory pool expansion through the function of expanding a memory pool.

The computing device provided in the embodiments of the present disclosure further includes a memory expansion unit, wherein the memory expansion unit is connected to a second downstream port of the first PCIe switch. A local memory of the memory expansion unit and the host memory form a converged memory, enabling the accelerator can access a memory space shared by the CPU and the memory expansion unit, thereby reducing the latency of data transmission and the overhead of replication. The CPU and the memory expansion unit share the same memory resource, and thus the required physical memory capacity in the system can be reduced, hardware costs are reduced, and memory management can be more unified, and the overall performance of the system is improved.

In some embodiments, the memory expansion unit includes a memory expansion board.

In an embodiment, the memory expansion board is connected to a second downstream port of the first PCIe switch;
a local memory of the memory expansion board and the host memory form a converged memory; and
the accelerator is configured to perform access operations on the converged memory based on the CXL protocol. Here, the CXL protocol includes CXL.io and CXL.mem protocols, and by implementing the CXL.io and CXL.mem protocol layers, the local memory of the memory expansion board and the host memory constitutes a converged memory, such that the accelerator can access the local memory carried by the memory expansion board.

In an embodiment, the memory expansion board includes at least one Dynamic Random Access memory (DRAM) or at least one Storage Class Memory (SCM).

According to the computing device provided in the embodiments of the present disclosure, the memory expansion unit may be a memory expansion board, the accelerator can access the converged memory formed by the local memory of the memory expansion board and the host memory, such that the available memory of the accelerator is expanded, more efficient memory access and sharing are provided, data access can be accelerated, and the performance is improved.

In some embodiments, the computing device further includes: a non-volatile memory express (NVMe) Solid State Drive (SSD), wherein the NVMe solid state drive is connected to a third downstream port of the first PCIe switch;
and the accelerator is configured to perform access operations on the NVMe solid state drive based on the CXL protocol.

In an embodiment, the PCle switch supports peer-to-peer (P2P) communication between the NVMe SSD and the GPU, and allows data to be directly transmitted between the NVMe SSD and the GPU, without involving the host CPU. Such a direct communication path may significantly reduce data transmission latency and CPU overhead, thereby improving the overall system performance under certain workloads. In conventional PCIe configurations, for data transmissions between the NVMe SSD and the GPU, it is necessary to first send data from the NVMe SSD to a memory of the host, and then send the data from the memory of the host to a memory of the GPU. This process involves multiple hops, adding additional latency. However, through the P2P communication of the PCIe switch, the NVMe SSD and the GPU may perform data exchange directly through the PCIe switch, without involving the memory of the host or the CPU. Such P2P communication is particularly suitable for tasks requiring frequent data exchange between the NVMe SSD and the GPU, such as data intensive workloads like artificial intelligence, machine learning and high performance computing. By enabling direct communication, the P2P function of the PCle switch can enhance the overall efficiency and performance of data intensive applications, and reduce the data movement bottlenecks.

In some embodiments, the computing device further includes: a Network Interface Controller (NIC), wherein the NIC is connected to a fourth downstream port of the first PCIe switch; and the accelerator is configured to perform data interaction with the NIC based on the CXL protocol.

In an embodiment, the PCle switch hardware itself has a peer-to-peer communication function, and supports peer-to-peer shortest path transmission. The accelerator can directly transmit data with the NIC to the Ethernet through the switch P2P function. The shortest path transmission only passes through the PCle switch without causing any CPU burden, thereby reducing the waste of system resources.

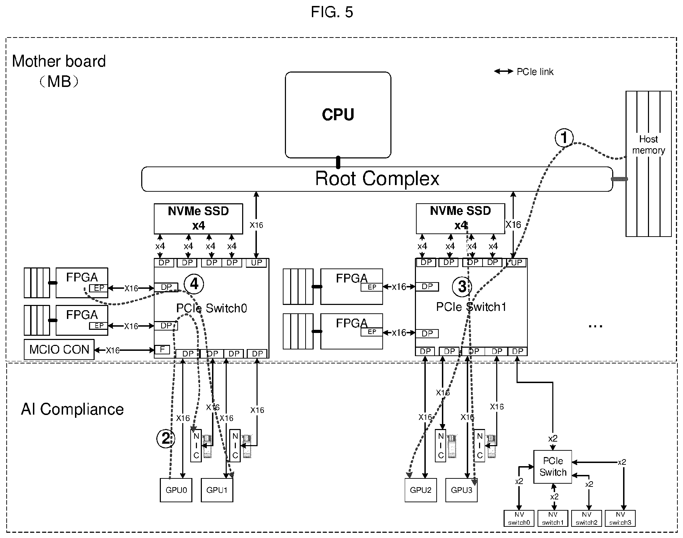

FIG. 5 is a schematic diagram of a direct memory access architecture provided according to embodiments of the present disclosure. As shown in FIG. 5, the architecture includes: a mother board (MB) and artificial intelligence compliance (AI Compliance).

The mother board (MB) includes a CPU, four groups of PCle switches (only two groups are shown in FIG. 5), eight groups of FPGAs (only four groups are shown in FIG. 5), and two groups of Mini Cool Edge Input/Output (MCIO) connectors (only one group is shown in FIG. 5).

The CPU is an X86 platform, and needs to be a model supporting a CXL function.

The four groups of PCle switches include PCIe switch1, switch2, switch3 and switch4.

A downstream port of each PCle switch must support the operation in a CXL mode or a PCIe mode. Furthermore, it is applicable to data intensive workloads such as AI. The model thereof is Broadcom's Atlas 3-series PCle switch.

As shown in FIG. 5, the eight groups of FPGAs are mounted on downstream ports of PCle switches, such that high-speed, low-latency and high-efficiency data transmission and communication can be achieved between the CPU and the FPGAs. Each FPGA has multiple groups of independent x16 lanes PCle endpoints. Each independent group of PCIe endpoints may be regarded as one group of PCIe devices. An 8-lane DMA (Direct Memory Access) controller is built in the computing device, and supports DDR5 and LPDDR5 interfaces and supports CXL.

Two groups of MCIO x16 connectors are used for memory expansion (scale-up).

In FIG. 5, UP represents UPstream (upstream port), DP represents Downstream (downstream port), F represents a Fabric port, and EP represents an endpoint. A root complex is one of important assemblies in a PCI Express (PCle) bus architecture, and is a logical node for managing the entire PCIe system. The root complex is generally implemented by a CPU, computing device groups, or FPGAs. In a PCIe system, all devices need to be connected to a PCle bus, and the root complex, as a start point and a central node of the PCIe bus architecture, is responsible for managing all PCle devices and endpoints, including allocating and managing a bus bandwidth, controlling transmission, routing data, and the like.

Each group of PCle switch downstream ports is configured with dual GPUs and dual NICs. When such a configuration is used in a machine learning training phase, optimization and learning need to performed on a model by using large-scale training data sets. The training phase has a high requirement for network bandwidth speed, as a large amount of training data needs to be transmitted from a storage device (such as cloud storage or local storage) to a training server or device. The data transmission amount in the training process is generally very large, and especially in distributed training, data needs to be frequently exchanged among multiple devices. Therefore, high-speed and low-latency network bandwidth is very important, and can significantly affect the training speed and efficiency. In large-scale machine learning training, large-scale data transmission is typically supported using high-bandwidth network connections and specialized network architectures.

The machine learning training phase has a high requirement on the network bandwidth speed. When a machine learning system is designed and deployed, the requirement for network bandwidth needs to be considered according to specific application scenarios and data scales, so as to ensure the stability and high efficiency of the system.

In FIG. 5, PCle switch hardware itself has a peer-to-peer communication function, and supports peer-to-peer shortest path transmission. As shown in ② of FIG. 5, a GPU can directly transmit data with the NIC to the Ethernet through the switch P2P function. The shortest path transmission only passes through the PCle switch without causing any CPU burden, thereby reducing the waste of system resources. In ③ of FIG. 5, the PCle switch also supports peer-to-peer (P2P) communication between the NVMe SSD and the GPU, and allows data to be directly transmitted between the NVMe solid state drive (NVMe SSD) and the Graphic Processing Unit (GPU), without involving the host CPU. Such a direct communication path may significantly reduce data transmission latency and CPU overhead, thereby improving the overall system performance under certain workloads. In conventional PCIe configurations, for data transmissions between the NVMe SSD and the GPU, it is necessary to first send data from the NVMe SSD to the memory of the host, and then send the data from the memory of the host to a memory of the GPU. This process involves multiple hops, adding additional latency. However, through the P2P communication of the PCIe switch, the NVMe SSD and the GPU may perform data exchange directly through the PCIe switch, without involving the memory of the host or the CPU. Such P2P communication is particularly suitable for tasks requiring frequent data exchange between the NVMe SSD and the GPU, such as data intensive workloads like artificial intelligence, machine learning and high performance computing. By enabling direct communication, the P2P function of the PCle switch can enhance the overall efficiency and performance of data intensive applications, and reduce the data movement bottlenecks.

① in FIG. 5 relates to an application of CXL Type 1, which can implement an action that a GPU directly accesses the host memory of the system. In ④ of FIG. 5, such a configuration allows the GPU and the FPGA to directly perform peer-to-peer (P2P) communication, such that they can directly access the memory of the other, without participation of the host CPU. In an embodiment, when the GPU needs to access the memory of the FPGA, it can directly transfer data to the memory location of the FPGA via the PCIe switch. Likewise, when the FPGA needs to access the memory of the GPU, it can also directly read data from the memory of the GPU via the PCIe switch. Such a direct communication manner may reduce latency of data transmission and participation of a CPU, and improve efficiency and performance of memory access. Such P2P memory access between GPU and FPGA is generally applicable to applications requiring efficient data exchange and sharing, for example, in the fields of artificial intelligence, machine learning, high performance computing, and the like. The memory access between the GPU and the FPGA is implemented via the PCle switch, and a high-bandwidth and low-latency communication channel can be provided, thereby further enhancing computing and data processing capabilities of the system.

In addition, in FIG. 5, a converged memory architecture may also be achieved between the FPGA and the host memory by using an application of CXL Type 2, and the FPGA accelerates bidirectional memory sharing between the device and the host CPU. This allows devices such as the FPGA to have a high-performance independent memory (for example, GDDR or HBM) and share the memory with the CPU, so as to achieve more efficient data transmission and processing. A converged memory is formed by using the host memory of the CPU and an optional memory of the FPGA, thereby forming a large memory pool.

In some embodiments, the computing device further includes: a first MCIO connector,
wherein the first MCIO connector is connected to a Fabric port of the first PCle switch, and is configured to connect to a second MCIO connector of another computing device.

A main function of the Fabric port is to support mutual transmission between PCIe switches, and has an I/O sharing function and DMA that have characteristics such as non-blocking, linear acceleration, and the like.

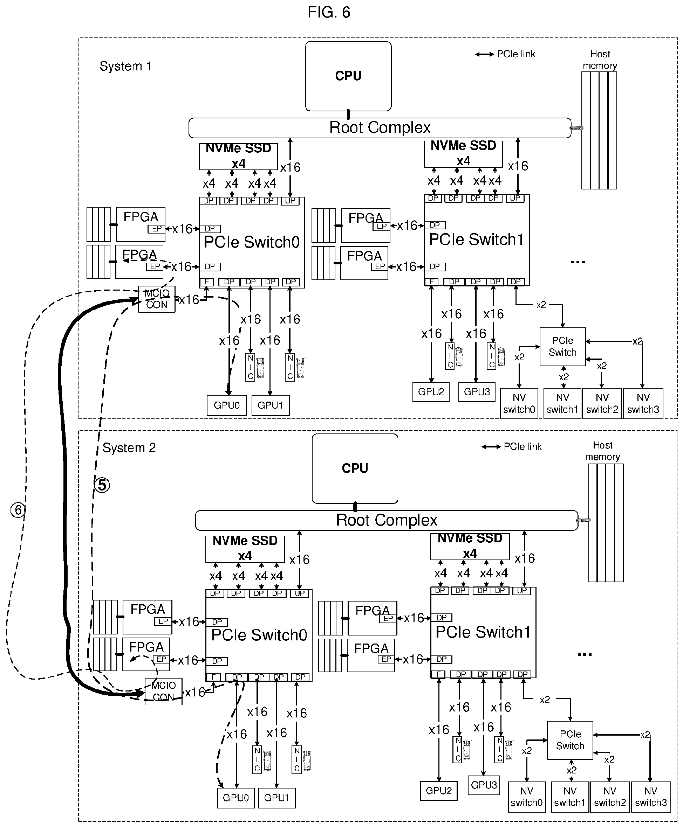

FIG. 6 is a schematic diagram of expansion of a memory direct access architecture provided according to embodiments of the present disclosure. As shown in ⑤ of FIG. 6, peer-to-peer transmission between GPUs across two systems is achieved by the characteristics of a Fabric link, and a process of dynamically adjusting and balancing workloads between multiple GPU devices is implemented. When parallel computing is performed, workloads may be allocated to multiple GPUs for accelerated processing, but performance and resources of different GPUs may be different, and therefore it is necessary to perform dynamic adjustment to ensure the optimum performance and efficiency. As shown in ⑥ of FIG. 6, peer-to-peer communication between FPGA of system 1 and FPGA of system 2 may also be achieved by a Fabric link and a CXL application, and memory pools of the two systems are integrated. Such a design may achieve efficient data exchange and sharing, thereby improving the overall performance and efficiency of the system. This means that FPGAs of the two systems can directly access the memory of each other, so as to share memory resources, thereby more effectively managing and utilizing the memory.

The present disclosure further provides another memory expansion architecture.

In some embodiments, the memory expansion unit includes a memory pool, and the memory pool includes at least one second processing unit having an independent memory, and at least one second PCIe switch;

and a downstream port of the second PCle switch is connected to a first endpoint port of the second processing unit, and a second endpoint port of the second processing unit is connected to a fifth downstream port of the first PCIe switch.

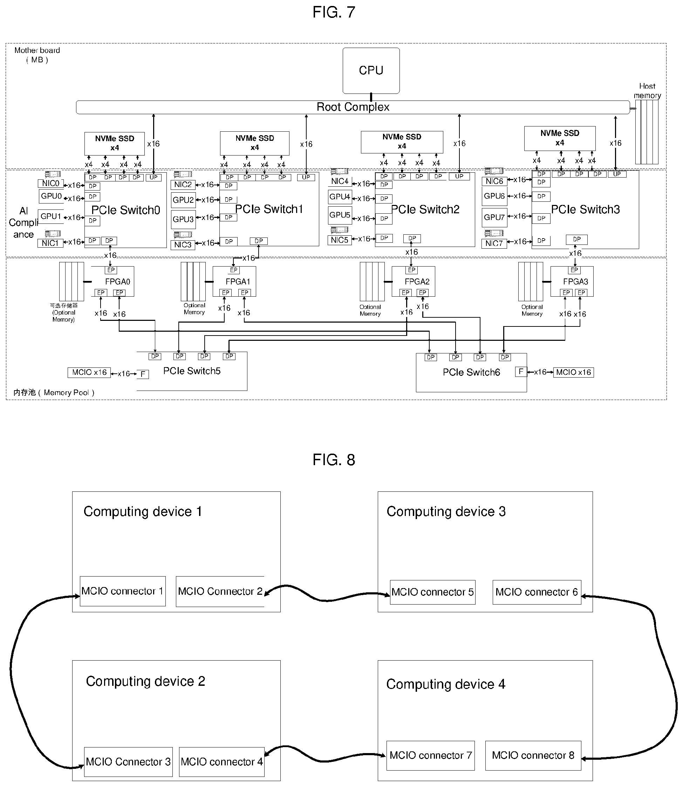

FIG. 7 is a first schematic diagram of a memory pool expansion architecture provided according to embodiments of the present disclosure. The memory pool expansion architecture includes:
1. MB (Mother Board)
   The CPU is an X86 platform, and needs to be a model supporting a CXL function.
2. AI compliance, including:
   four groups of PCIe switches: PCle switch1, switch2, switch3 and switch4.
   Each group of PCle switch downstream ports is configured with dual GPUs and dual NICs.
   Each group of PCle switches is associated with four groups of NVMe SSDs, and the entire system has a total of 16 groups of NVMe SSD storage units.
3. Memory pool, including:
   4 groups of FPGAs (such as FPGA0, FPGA1, FPGA2, and FPGA3 mounted on PCle switch downstream ports);
   2 groups of PCle switches (e.g. switch5, switch6); and
   2 groups of MCIO x16 connectors, for FPGA scale-up.

As shown in FIG. 7, each FPGA of this architecture has three groups of PCle endpoints, and in this architecture, a downstream port of each of PCle switch0, PCIe switch1, PCIe switch2 and PCIe switch3 is connected to one group of endpoint ports of a respective one of FPGA0, FPGA1, FPGA2 and FPGA3; and a downstream port of each of PCle switch5 and PCIe switch6 is connected to two groups of endpoints of a respective one of FPGA0, FPGA1, FPGA2 and FPGA3; and the PCIe switch5 and the PCIe switch6 each have one group of Fabric ports to be connected to an MCIO connector, in which system connection can be achieved via a cable, as a system bridge of memory scale-up.

In embodiments of the present disclosure, the memory expansion unit may be a memory pool, and the memory pool includes at least one second processing unit having an independent memory, and at least one second PCIe switch; the accelerator may access a local memory of the second processing unit in the memory pool, and a converged memory formed by the local memory of the first processing unit and the host memory, such that the available memory of the accelerator is expanded, more efficient memory access and sharing are provided, data access may be accelerated, and the performance is improved.

In an embodiment, the second processing unit includes any one or a combination of: a Field Programmable Gate Array (FPGA), a Complex Programmable Logic Device (CPLD), a Programmable Logic Device (PLD), an Application Specific Integrated Circuit (ASIC), a Generic Array Logic (GAL) device, a System on Chip (SOC), a Software Defined Infrastructure (SDI) device, and an Artificial Intelligence (AI) device.

In an embodiment, the memory pool further includes a third MCIO connector, and the third MCIO connector is connected to a Fabric port of the second PCle switch and is configured to connect to a fourth MCIO connector of another computing device.

FIG. 8 is a second schematic diagram of a memory pool expansion architecture provided according to embodiments of the present disclosure. As shown in FIG. 8, four computing devices (or referred to as systems) are connected in a Daisy-chain manner by using MCIO, such that a large memory pool can be formed, and the four computing devices expand a shared memory and perform dynamic memory allocation. In this case, systems of the four groups of hosts can form a star-link interconnected topology. When system 1 has a requirement for a large memory, the architecture allocates memory resources across all systems via a Fabric port, so as to achieve dynamic resource allocation, thereby increasing the computation capability of an arithmetic unit of the system, such that resources can be optimized to the maximum extent.

In an embodiment, the FPGA is configured to partition internal resources of the FPGA into different areas by using a dynamic partition technology, or implement dynamic memory allocation and data transmission of a memory by using at least one Direct Memory Access (DMA) controller.

The FPGA can realize the function of memory allocation, which means that memory resources are dynamically allocated and managed in the FPGA, such that different modules or subsystems can share and use these memories. The memory allocation function of the FPGA needs to be implemented in the following manner:
a) dynamic partitioning: the FPGA can use dynamic partitioning technology to partition its internal resources into different areas, in which a partial area can be used as an FPGA host memory area. The remaining part can be used as a partition area, which allows allocation to each GPU or CPU for use at runtime, depending on system requirements.
b) DMA controller: the FPGA can use a DMA (Direct Memory Access) controller to implement dynamic memory allocation and data transmission. The DMA controller can transfer data from a memory area of the FPGA to other devices or modules, and can also transmit data from other devices or modules to the memory area of the FPGA, thereby realizing dynamic sharing and use of the memory.

The FPGA used in the architecture of the present disclosure has a Multi Channel DMA IP for PCI Express, and is mainly composed of an H2DDM (Host-to-Device Data Mover) module and a D2HDM (Device-to-Host Data Mover, D2H Data Mover) module. It also provides a DMA-bypass function for the host, so as to perform a PIO read/write operation on the device memory.

An MCDMA engine runs on a software DMA queue, and is configured to transmit data between the local FPGA and the host. Elements of each queue are software descriptors written by drive program/software. Hardware reads the queue descriptors and executes same. Hardware may support up to 2K DMA channels. For each lane, a separate queue is used to perform read/write DMA operations.

The H2DDM module transmits data from the memory of the host to the local memory via a PCIe hardware IP and an Avalon-MM Write Master/Avalon-ST Source interface.

The D2HDM module transmits data from the device memory to the memory of the host. It receives data from user logic via an Avalon-MM Read Master/Avalon-ST Sink interface, generates Mem Wr TLPs according to descriptor information (such as a PCIe address (destination), data size and MPS value), moves the data to the host, and transmits the data to a receiving buffer area of the memory of the host.

In some embodiments, the accelerator is a Graphic Processing Unit (GPU).

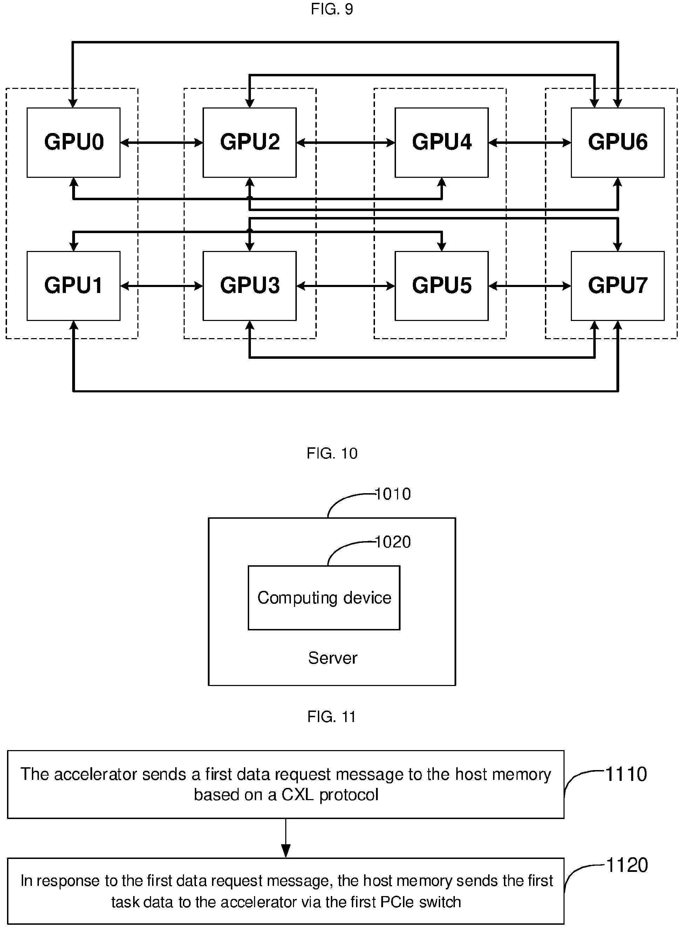

FIG. 9 is a schematic connection diagram of eight GPUs, i.e. GPU0 to GPU7, provided according to embodiments of the present disclosure, which is referred to as a connection mode of star-interconnect topology, in which interconnection is achieved via PCIe switch0, PCIe switch1, PCIe switch2, and PCIe switch3, wherein PCle switch0, PCIe switch1, PCIe switch2, and PCIe switch3 are not shown in FIG. 9. All downstream ports of the PCIe switch0 are connected to GPU0 and GPU1; PCle switch hardware itself has a peer-to-peer communication function, and supports peer-to-peer shortest path transmission; and the GPU0 and GPU1 can directly share memories thereof in a P2P manner. GPU2 and GPU3 are downstream ports of PCle switch1, GPU4 and GPU5 are downstream ports of PCle switch2, and GPU6 and GPU7 are downstream ports of PCle switch3, and they can all share the memories thereof via the P2P function. Therefore, as shown in FIG. 9, each group has an interconnection path. Moreover, these paths can allow for sharing of GPU memories of the eight groups. The GPU memory sharing refers to a process in which multiple computing units (usually threads) share the same memory when general computing is performed on the GPU. In a GPU, the GPU typically has a large number of computing cores, and multiple computing units can be executed simultaneously to accelerate processing.

The GPU memory sharing is implemented by using a shared memory or a global memory in the GPU. These memory areas may be accessed and operated by different computing units and allow same to share data during computing. Such a design may avoid unnecessary data replication and transmission, thereby improving the computing efficiency and performance.

However, in the GPU memory sharing, special attention needs to be paid to the problems of synchronization and contention conditions. Simultaneously accessing the shared memory by multiple computing units may lead to data contention and inconsistency. In order to ensure the correctness of data, a synchronization mechanism (such as mutex, semaphore) needs to be used to control the access to the shared memory, so as to ensure the consistency of data.

The GPU memory sharing is widely applied in many GPU computing applications, such as machine learning, deep learning, scientific computing, and image processing. By appropriately designing and managing the shared memory, the computing efficiency of the GPU can be maximally increased, thereby realizing faster and more efficient computations.

The computing device provided in the embodiments of the present disclosure has the following beneficial effects: 1) Resource sharing: the GPU and a host CPU share the same memory space, and can directly access data in the host memory, thereby avoiding additional replication of data from the host memory to a GPU dedicated memory. 2) Cost reduction: the GPU and CPU can directly configure memory capacity via CXL expansion. 3) Cache acceleration: the host memory is used as a cache memory, which can accelerate data access of the GPU and improve the performance. 4) The introduction of the CXL technology further promotes the collaborative work between the GPU and the host CPU, and provides more efficient memory access and sharing, thereby optimizing high-performance computing applications. 5) With the CXL protocol, memory between the host CPU and the accelerator can be dynamically allocated. This means that when a certain accelerator needs more memory space to process a specific task, the accelerator can apply to the host CPU for more memory, and the host CPU can also allocate a part of the memory to the accelerator, so as to share memory resources in an optimal manner. 6) The implementation of the memory pool by using the CXL protocol can greatly improve the overall performance of the system. The accelerator can directly access a memory of the host CPU, thereby avoiding cumbersome data transmission and replication processes, and reducing computing and data processing time, thereby increasing the running speed of the system.

FIG. 10 is a schematic structural diagram of a server provided according to embodiments of the present disclosure. As shown in FIG. 10, the server 1010 includes a computing device 1020. For understanding of the computing device, reference may be made to the description in the embodiments above, and details will not be repeated herein.

For example, the computing device provided in the described embodiments of the present disclosure can be applied to an AI server, and can solve the problem of insufficient memory of an arithmetic unit, so as to meet the requirements of increasingly complex and huge AI models.

FIG. 11 is a schematic flowchart of a data processing method provided according to embodiments of the present disclosure. As shown in FIG. 11, the data processing method includes:
step 1110: an accelerator sends a first data request message to a host memory based on a CXL protocol;
wherein in this step, the accelerator is connected to a CPU by a first PCle switch, such that the accelerator directly performs an access operation on a host memory of a system based on the CXL protocol; therefore, when needed, the accelerator sends the first data request message to the host memory based on the CXL protocol, the first data request message being used for requesting first task data stored in the host memory.

In an embodiment, the CXL protocol includes CXL.io and CXL.cache protocols .

Step 1120: in response to the first data request message, the host memory sends the first task data to the accelerator via the first PCIe switch.

In this step, the host memory receives the first data request message sent by the accelerator, wherein the first data request message is used for requesting the first task data stored in the host memory; therefore, in response to the first data request message, the first task data is acquired, and the first task data is sent to the accelerator via the first PCIe switch.

In embodiments of the present disclosure, the accelerator directly acquires data from the host memory based on the CXL protocol, thereby expanding an available memory of the accelerator, providing more efficient memory access and sharing, accelerating data access, and improving the performance.

In some embodiments, the method further includes:
the accelerator executes a computing task on the basis of the first task data, and generates first result data; and
the accelerator receives a second data request message sent by the CPU, and sends the first result data to the host memory.

It can be understood that the accelerator is connected to the CPU via the first PCle switch, such that the accelerator can perform access operations on the host memory based on the CXL protocol; and upon receiving the first task data, the accelerator executes a corresponding computing task and generates the first result data; and the system stores the first result data in the host memory, for use by the CPU or other devices as required during execution of other computing tasks. The accelerator can also store the first result data in a local memory of the accelerator, the CPU actively acquires the first result data from the accelerator when necessary, and the accelerator receives the second data request message sent by the CPU and sends the first result data to the host memory, such that the CPU can also use the memory of the accelerator, thereby providing more efficient memory access and sharing.

In embodiments of the present disclosure, the accelerator executes a computing task on the basis of the first task data, generates the first result data, and sends the first result data to the host memory; and the CPU may also use the computing result of the accelerator or data stored in the memory, thereby providing more efficient memory access and sharing.

In some embodiments, the method further includes:
the accelerator sends a third data request message to the memory expansion unit baed on the CXL protocol; and
in response to the third data request message, the memory expansion unit sends second task data to the accelerator via the first PCIe switch.

For running of the method in the present embodiment, it is necessary that a memory expansion unit exists in the computing device. The memory expansion unit is connected to a second downstream port of the first PCIe switch; a local memory of the memory expansion unit and the host memory form a converged memory; and the accelerator is configured to perform access operations on the converged memory based on the CXL protocol. It can be understood that the accelerator can perform access operations on the converged memory baed on the CXL protocol, that is, the accelerator can acquire data from the local memory of the memory expansion unit. In an embodiment, the accelerator sends the third data request message to the memory expansion unit based on the CXL protocol, and in response to the third data request message, the memory expansion unit sends second task data to the accelerator via the first PCIe switch.

In embodiments of the present disclosure, the local memory of the memory expansion unit and the host memory form a converged memory, and the accelerator may perform access operations on the converged memory based on the CXL protocol; data may be more effectively shared and moved between memory hierarchies of different levels, thereby reducing data transmission requirements between different memory types, and potentially reducing latency.

In some embodiments, the method further includes:
the accelerator stores third task data to the memory expansion unit via the first PCIe switch.

The accelerator can perform access operations on the converged memory based on the CXL protocol. That is, the accelerator can store data into the local memory of the memory expansion unit by the CXL protocol. In an embodiment, the accelerator stores third task data to the memory expansion unit via the first PCIe switch.

In embodiments of the present disclosure, the accelerator may access a memory space shared by the CPU and the memory expansion unit, such that the latency of data transmission and the overhead of replication are reduced; and the CPU and the memory expansion unit share the same memory resource, and thus the required physical memory capacity in the system may be reduced, hardware costs are reduced, and memory management may be more unified, and the overall performance of the system is improved.

In another aspect, the present disclosure further provides a computer-readable instruction product, wherein the computer-readable instruction product includes computer-readable instructions, the computer-readable instructions may be stored in a non-transitory computer-readable storage medium; and when the computer-readable instructions are executed by a processor, a computer can execute the described embodiments of the data processing method, and details will not be repeated herein.

In still another aspect, the present disclosure further provides a non-transitory computer-readable storage medium, on which computer-readable instructions are stored, wherein the computer-readable instructions, when executed by a processor, implement the described embodiments of the data processing method, and details will not be repeated herein.

It should be noted that, embodiments of the present disclosure may be freely combined, executed in an exchanged sequence, or executed independently, without relying on or depending on a fixed execution sequence.

The apparatus embodiments as described above are merely exemplary. The units described as separate components may or may not be physically separated, and the components displayed as units may or may not be physical units, that is, may be located in one place, or may be distributed to multiple network units. Some or all of the modules may be selected according to actual needs to achieve the purpose of the solutions of the embodiments. A person of ordinary skill in the art would understand and implement the embodiments without any inventive effort.

From the description of the described embodiments, a person skilled in the art would have been able to clearly understand that the embodiments may be implemented by using software and necessary general hardware platforms, and of course may also be implemented using hardware. On the basis of such understanding, the portion of the technical solution that contributes in essence or to the related art may be embodied in the form of a software product, the computer software product being stored in a computer-readable storage medium (such as an ROM/RAM, a magnetic disk and an optical disc); and the storage medium includes several instructions to cause a computer device (which may be a personal computer, a server or a network device, etc.) to perform the method according to the various embodiments or some parts of the embodiments.

Finally, it should be noted that the embodiments above are only used to illustrate rather than limit the technical solutions of the present disclosure. Although the present disclosure has been explained in detail with reference to the embodiments above, a person of ordinary skill in the art would have understood: they still could modify the technical solutions disclosed in the described embodiments or make equivalent replacements to some technical features therein. Moreover, these modifications or replacements shall not render that the nature of the corresponding technical solutions departs from the spirit and scope of the technical solutions in embodiments of the present disclosure.

## Claims

1. A computing device, comprising:
a Central Processing Unit (CPU);
an accelerator; and
a first Peripheral Component Interconnect Express (PCle) switch comprising:
a first downstream port connected to the accelerator,
an upstream port connected to the CPU, and
multiple ports each supporting Compute Express Link (CXL) protocol;
wherein the accelerator is configured to perform access operations on a host memory based on the CXL protocol.

2. The computing device according to claim 1, further comprising:
a memory expansion unit connected to a second downstream port of the first PCIe switch;
wherein a local memory of the memory expansion unit and the host memory form a converged memory, and
the accelerator is configured to perform access operations on the converged memory based on the CXL protocol.

3. The computing device according to claim 2, wherein the memory expansion unit comprises at least one first processing unit having an independent memory.

4. The computing device according to claim 3, wherein the first processing unit comprises any one or a combination of: a Field Programmable Gate Array (FPGA), a Complex Programmable Logic Device (CPLD), a Programmable Logic Device (PLD), an Application Specific Integrated Circuit (ASIC), a Generic Array Logic (GAL) device, a System on Chip (SOC), a Software Defined Infrastructure (SDI) device, and an Artificial Intelligence (AI) device.

5. The computing device according to claim 2, wherein the memory expansion unit comprises a memory expansion board.

6. The computing device according to claim 5, wherein the memory expansion board comprises at least one Dynamic Random Access Memory (DRAM), or, at least one Storage Class Memory (SCM).

7. The computing device according to claim 1, further comprising: a Non-Volatile Memory Express (NVMe) Solid State Drive (SSD) connected to a third downstream port of the first PCIe switch;
wherein the accelerator is configured to perform access operations on the NVMe SSD based on the CXL protocol.

8. The computing device according to claim 1, further comprising: a Network Interface Controller (NIC) connected to a fourth downstream port of the first PCIe switch;
wherein the accelerator is configured to perform data interactions with the NIC based on the CXL protocol.

9. The computing device according to claim 1, further comprising:
a first Mini Cool Edge Input/Output (MCIO) connector connected to a Fabric port of the first PCIe switch, wherein the first MCIO connector is configured to connect to a second MCIO connector of another computing device.

10. The computing device according to claim 2, wherein the memory expansion unit comprises:
a memory pool comprising:
at least one second processing unit having an independent memory, and
at least one second PCIe switch;
wherein a downstream port of the second PCle switch is connected to a first endpoint port of the second processing unit, and a second endpoint port of the second processing unit is connected to a fifth downstream port of the first PCIe switch.

11. The computing device according to claim 10, wherein the memory pool further comprises:
a third MCIO connector connected to a Fabric port of the second PCIe switch;
wherein the third MCIO connector is configured to connect to a fourth MCIO connector of another computing device.

12. The computing device according to claim 10, wherein the second processing unit comprises any one or a combination of: a Field Programmable Gate Array (FPGA), a Complex Programmable Logic Device (CPLD), a Programmable Logic Device (PLD), an Application Specific Integrated Circuit (ASIC), a Generic Array Logic (GAL) device, a System on Chip (SOC), a Software Defined Infrastructure (SDI) device, and an Artificial Intelligence (AI) device.

13. The computing device according to claim 12, wherein the FPGA is configured to partition internal resources of the FPGA into different areas by using a dynamic partition technology, or implement dynamic memory allocation and data transmission of a memory by using at least one Direct Memory Access (DMA) controller.

14. The computing device according to any of claims 1 to 13, wherein the accelerator is a Graphic Processing Unit (GPU).

15. A server, comprising the computing device according to any one of claims 1 to 14.

16. A data processing method, which is based on the computing device according to any of claims 1 to 14, comprising:
sending, by the accelerator, a first data request message to the host memory based on the CXL protocol; and
sending, by the host memory and in response to the first data request message, first task data to the accelerator via the first PCIe switch.

17. The data processing method according to claim 16, wherein the method further comprises:
executing, by the accelerator, a computational task based on the first task data to generate first result data; and
receiving, by the accelerator, a second data request message sent by the CPU, and sending the first result data to the host memory.

18. The data processing method according to claim 16, wherein the method further comprises:
sending, by the accelerator, a third data request message to the memory expansion unit based on the CXL protocol; and
sending, by the memory expansion unit and in response to the third data request message, second task data to the accelerator via the first PCIe switch.

19. The data processing method according to claim 18, wherein the method further comprises:
storing, by the accelerator, third task data to the memory expansion unit via the first PCIe switch.

20. A non-transitory computer-readable storage medium, on which computer-readable instructions are stored, wherein the computer-readable instructions is configured to, in response to being executed by a processor, implement the data processing method according to any one of claims 16 to 19.
